# EUROPEAN PATENT APPLICATION

(11) **EP 1 868 342 A1**
(43) Date of publication of application: **19.12.2007**
(21) Application number: 06115491.0
(22) Date of filing: 14.06.2006
(51) Int. Cl.: H04L 29/06

(54) **Method, transmitting station and receiving station for transferring a real-time stream in a network of subscriber stations**

(71) Applicant: DEUTSCHE THOMSON-BRANDT GMBH, 78048 Villingen-Schwenningen (DE)
(72) Inventor: Dorau, Kai, 30559 Hannover (DE)
(74) Representative: Schäferjohann, Volker

(57) **Abstract**

The invention relates to the field of high speed data transmission between two stations (10, 20) in a network, e.g. a video source (10) such as a professional video camera and a destination station (20), such as a data recorder or a video server. In the environment of a professional video studio, the captured video data is to be transferred over the network in uncompressed fashion without any loss of information. To handle such a high data rate efficiently, it is important to hold the protocol header - means protocol overhead - short.

According to the invention it is proposed to go one step further and not only hold the protocol overhead short but also to spare out the implementation of two protocol layers, thereby saving a lot of band width on the network and also a lot of implementation effort.

Normally, a real-time source and destination should use the IP/UDP/RTP protocol stack. For the purpose of transmitting uncompressed video data, it was recognized, that the minimum important information from the RTP and UDP protocol layers is the RTP sequence number. The sequence number is needed for performing the re-ordering task in case of intermixed data packets on the transfer path. The invention claims to move the sequence number from the RTP protocol layer to the IPv4 protocol layer into an optional field. The implementations of the IP protocol layers need to be adapted in source (10) and destination device (20), in order to handle the sequence number calculation and extraction.

## Description

The invention concerns a method of transferring a real-time data stream, in particular audio and/or video stream, in a network of subscriber stations. Furthermore, the invention also relates to a sending station for transferring a real-time stream as well as a receiving station. Both are to be used in a method as mentioned above.

### Background of the invention

For transferring real-time data streams in a network, a number of solutions/protocols already exist. LAN networks are quite often built based on Ethernet bus technology.

Thinking about professional video production in studios, this is a field where non-linear video editing needs to be performed. This is done with workstations based on high-end personal computers and corresponding software for non-linear video editing, today. As Ethernet technology is the de facto standard in the field of computer networks, it is not surprising that there is a demand from the studios to also build their networks for professional video editing based on Ethernet network technology. If uncompressed video data needs to be transported from a professional video camera to a data recorder, there is a very high band width needed on the network for doing the job. For example, the HD Video format 1920 x 1080i with a frame rate of 24 frames per second and 10 bit colour resolution for the RGB colours, requires a data rate of 1.6 Gbit/s for transferring the uncompressed video stream. Including audio data and to be conform with to even higher video formats like 2K with a resolution of 2048 x 1556 pixels or 4K, the network technology should be ready to deal with much higher band width demands. Therefore, in one scenario the studios rely on the already existing 10Gbit Ethernet network technology. This network technology is based on two optical fibres one for each direction. The wave length of the light transporting the data is between 1269 and 1356 nm.

From Internet technology various protocols exist for transporting real-time data streams. In case of transferring uncompressed data streams for HDTV video production, the reliable TCP protocol cannot be used. Instead of that it is the IP/UDP/RTP protocol stack that is available for this purpose. Hereby, IP stands for the IPv4 Internet Protocol version 4. UDP stands for the well known User Data Protocol and RTP stands for the Real-time Transport Protocol. This protocol stack consists of unsecured protocol layers. All the services from the TCP protocol like acknowledging receipt of data packets and repeating of lost data packets is not implemented in the UDP/RTP protocols and in worst case the limited bandwidth would not be sufficient for it. As the order of transmission of packets can also be affected when transporting the packets over the LAN, the RTP protocol layer provides sequence numbering and time stamping.

### Invention

For transporting of uncompressed video data in a network of distributed stations, the IPv4/UDP/RTP protocol stack is the most suitable candidate for implementation. Going in more detail for the different protocols, reveals that the RTP header consists basically of a sequence number and a time stamp. While the sequence number is important for re-ordering the intermixed data packets, the time stamp is not unconditionally necessary. In a simple arrangement with one video source like a video camera being connected over Ethernet with a data recorder at the other end, the time stamp is not needed because there is no other stream transferred over Ethernet that needs to be synchronised with the video stream. The frame rate of the uncompressed video data is known so that in the non-linear editing system a time stamp can easily be generated.

The UDP protocol implements the possibility of different port numbers for different services on top of it. The port numbers are used for directing the data packets to a dedicated application. Socket numbers are used if more than one service is made available for the application. This, however, should be avoided in the situation of transporting uncompressed video data, because the best band width condition needs to be taken anyhow for transporting this amount of high speed real-time data.

The IP protocol IPv4 adds a standard header to the payload data including information entries for version numbers, protocol type for the address calculation, source and destination address, length of the IP packet, etc. to the data stream. The IP protocol also offers the possibility to put extra information called options to the data stream. For this purpose, at the end of the IP packet header there is an optional field reserved that could have a length 4 to 40 Bytes of extra data.

In finding an efficient implementation of a protocol stack for transporting uncompressed video streams in a network being based on Ethernet technology, the inventors knew that it is very important to hold the protocol overhead short. In doing the job, the inventors recognized that not only the protocol overhead should be questioned. In fact, they could also see the need of putting the implementation of a whole protocol layer in question. For the efficient implementation it is, therefore, proposed according to the invention to completely cancel the implementation of two protocol layers, namely the UDP protocol layer and the RTP protocol layer. For the reason that it was recognized that only the sequence number from the RTP protocol layer is needed in the destination device for being able to perform the re-ordering task, it is proposed to take the sequence number from the RTP layer and add this information to an optional field of the IP packet header from the IP packets.

This not only saves implementation effort in both devices, source and destination device, but also it optimizes the use of the available bandwidth on the network due to the fact that the UDP packet header and RTP packet header need not be transferred over the network cable. By preventing implementation of the UDP and RTP protocol layers, the corresponding implementation effort, especially the hardware development effort of the protocol stack is subjectively reduced. This fact influences the speed and the size of an implementation in hardware / software for real-time data transport under the constraint of being an uncompressed video data stream.

The invention consists in a method of transferring a real-time stream in a network of subscriber stations as claimed in claim 1. The invention further consists in a sending station for transferring a real-time stream as claimed in independent claim 5, as well as in a receiving station for transferring a real-time data stream claimed in independent claim 9.

Further advantages, measures and embodiments are apparent from the respective dependent claims.

### Drawings

Embodiments of the invention are explained herein after by means of the drawings, which show in
- Fig. 1: an example of a network in a studio environment;
- Fig. 2: the format of the RTP packet header;
- Fig. 3: the data flow in a classical RTP/UDP/IP protocol stack of a source device and a corresponding IP/UDP/RTP protocol stack of a destination device;
- Fig. 4: the data flow in the protocol stacks according to the invention of a source and a destination device;
- Fig. 5: the format of the IP packet header according to the invention;
- Fig. 6: a block diagram of a source device according to the invention and;
- Fig. 7: a block diagram of a destination device according to the invention.

### Detailed description of the invention

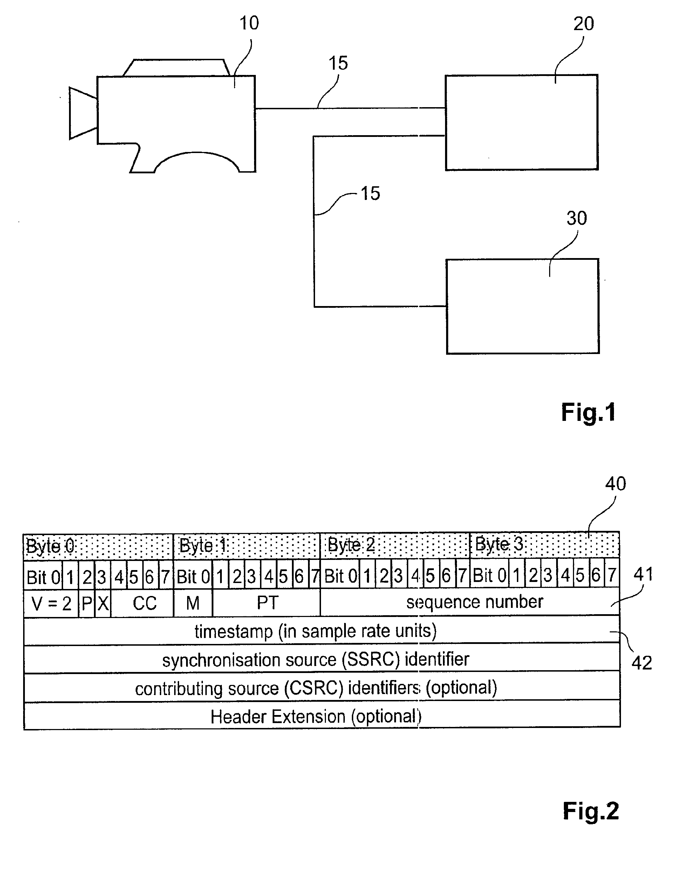

In Fig. 1 reference number 10 denotes a professional video camera. The camera 10 is connected to a video server system 20 via 10Gbit-Ethernet bus 15. The raw video material is backed up on the video server 20 consisting of a number of high capacity hard disc drives HDD. After the video content has been recorded onto the video server 20 it is available for further processing. Normally, post production consists of a non-linear video editing. This type of work is usually performed in work stations being located in different rooms in a studio. An example of these work stations is depicted in Fig. 1 and has the reference number 30. This work station is likewise connected to the video server 20 by means of a 10Gbit Ethernet cable 15. Of course, and not shown, all of the three devices camera 10, server 20 and work station 30 are equipped with corresponding 10Gbit Ethernet interfaces.

Fig. 2 shows the format of an RTP packet header. Two entries are marked with a dedicated reference number. One is the sequence number in a corresponding 16bit field 41 and the other is a time stamp in a 32bit field 42. The sequence number increments by 1 for each RTP data packet sent, and may be used by the receiver to detect packet losses and to restore the packet sequence. The initial value of the sequence number should be random (unpredictable) to make known plaintext-attacks on encryption more difficult, even if the source itself does not use encryption, because the packets may flow through a translator that does.

The time stamp reflects the sampling instant of the first octet in the RTP data packet. The sample instant is derived from a clock that increments monotonically and linearly in time to allow synchronization in jitter calculations. If RTP packets are generated periodically, the nominal sampling instant as determined by the sampling clock is to be used, not a reading of the system clock. As explained above under conditions and constraints of sending uncompressed video data over the network, the time stamp field need not necessarily be transported over the network to the destination device, because this information can be derived from the internal clock of the destination device by itself, if the frame rate is known, which is usually the case, and lost packets are detected. The sequence number already provides for recognizing lost packets and, therefore, this condition is fulfilled.

Further information about the RTP header and the RTP protocol are available from Request For Comment RFC3550, in which the RTP protocol has been standardized.

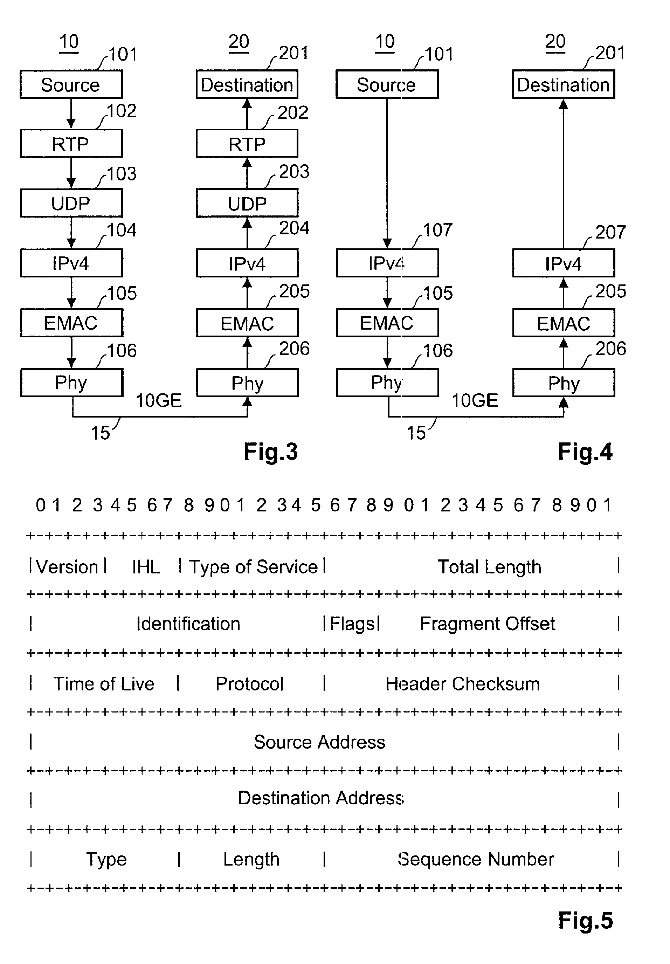

Fig. 3 shows the data flow in the classical RTP/UDP/IP protocol stack of a source device 10 as well as the corresponding IP/UDP/RTP protocol stack of a destination device 20. With reference number 101 an application software in the source device 10 is denoted. This application delivers video data recorded by the video camera to the transport layer in the device. With reference number 102 the RTP protocol implementation is denoted. The UDP protocol 103 follows directly below the RTP protocol layer. Below the UDP protocol there is the IP protocol IPv4 denoted with reference number 104 depicted. Ahead of the IP packet header, an Ethernet MAC header is also added to the IP packet. This is done in the Ethernet MAC layer 105. The completed Ethernet packet is transported over the 10Gbit Ethernet line by means of the corresponding physical layer which is denoted with reference number 106.

In the destination device the data flow is visa versa. The Ethernet packet is received by the physical layer 206 in the destination device. An Ethernet MAC packet is evaluated in Ethernet MAC layer 205. From the IP packet an embedded UDP packet is extracted in the IPv4 layer 204. The UDP packet is delivered to the UDP protocol layer 203. The payload data of the UDP packet concerns an RTP packet and is forwarded to the RTP protocol layer 202 in the destination device 20. Finally, the payload data of the RTP packet, this is the video data in uncompressed form, is delivered to the application software 201 in the destination device 20. As a further reference for the purpose of the disclosure of the invention it is referred to the request for command RFC768, wherein the UDP protocol is specified.

Furthermore, it is referred to RFC791, in which the IPv4 protocol is specified. For the Ethernet network technology, the two layers 106 and 105 respectively 206 and 205 need to be implemented in each of the devices. With regard to the OSI/ISO model of data communication, those two components relate to the data link layer and physical layer inside this model. A number of standards are available for Ethernet bus technology. In case of 10Gbit Ethernet, it is referred to the IEEE802.3ae standard.

The full implementation of all the three layers RTP/UDP/IP is not unconditionally necessary as explained above.

Fig. 4 shows a reduced implementation of protocol stacks in source and destination device for the purpose of transferring uncompressed video data streams over the network. The reference numbers in Fig. 4 having the same identity as in Fig. 3, refer to the same components as in Fig. 3. As shown, the two protocol layers RTP and UDP are not implemented at all neither in the source device 10 nor destination device 20. Instead, the implementation of the IP protocol deviates a bit from the standard implementation as shown in Fig. 3. This is why the implementation of IP protocol is referred by reference number 107 in case of the source device and by reference number 207 in case of the destination device in Fig. 4.

To explain the difference between both implementations, it is referred to Fig. 5. Fig. 5 shows the format of the IP packet header according to IP protocol version 4. The five first quadlets of this header correspond to the standardized components of this header. The sixth quadlet is in the optional field of the standardized IP packet header. This quadlet includes an entry for the type of the information in the optional field. A field for the length of the information in the optional field and the sequence number is located in a 16bit field of this optional quadlet. The sequence number corresponds to a sequence number that is used in RTP protocol. Therefore, there needs to be an implementation of calculating the sequence in the manner as specified in RTP protocol specification inside the source device 10. This algorithm can be part of the application programme 101 or it can be part of the particular implementation of the IP protocol 107. Alternatively, a longer sequence number could be inserted in the optional field. In that case more effort needs to be spent in order to build a new algorithm for generating and evaluating the sequence number.

For the destination device 20 there needs to be a corresponding IP protocol layer implementation 207, in which the optional field in the IP packet header is evaluated. The sequence number will be extracted from the IP packet header in this protocol layer implementation 207 and delivered to the application software 201 in the destination device 20. The application software 201 is responsible for performing the re-ordering task based on the sequence number received.

In one embodiment the entries in the type and length field of the optional quadlet, can be the decimal value 138 for the type field and the decimal value 4 for the length field. Some types of optional fields are already specified in the RTP protocol. Others including the above mentioned one need to be specified. The Real Time Streaming protocol RTSP, see Request for Comments RFC 2326 is used for controlling the real time streaming. Also this protocol needs to be aware of what types of optional fields will be used. As explained before the initial value of the sequence number should be random just like specified in the RTP protocol.

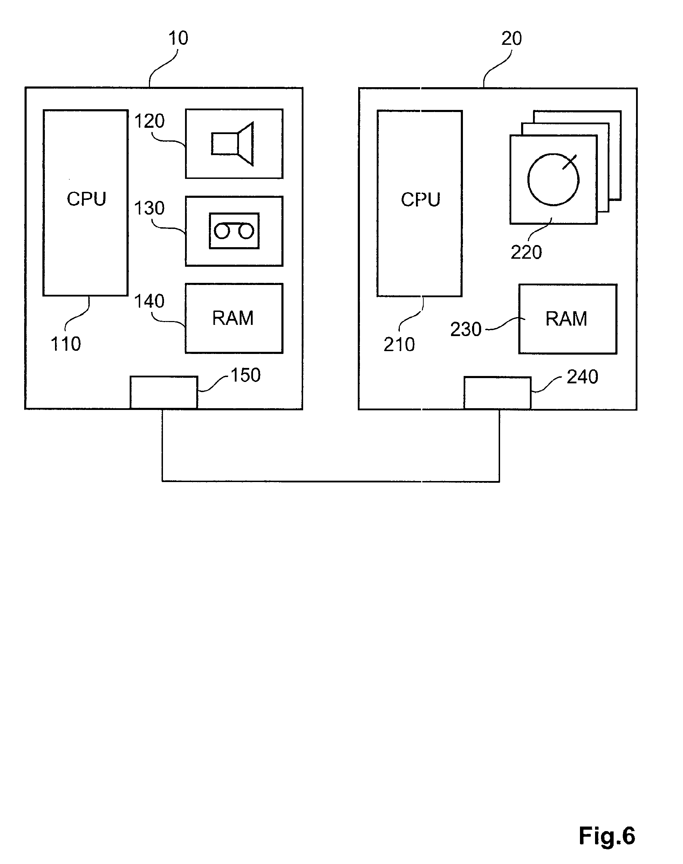

Fig. 6 shows two top level block diagrams for the source and destination devices 10 and 20. The components of the professional video camera 10 are a microprocessor 110, a camera module 120, a data recorder 130, a memory section 140 and an Ethernet interface 150 compliant to 10Gbit Ethernet standard. The data recorder 130 can be a recorder recording the video data on a magnetic tape or alternatively on solid state non-volatile memories like Flash EPROM integrated circuits. The Ethernet interface 150 comprises hardware circuitry for both layers of the Ethernet bus protocol, namely physical layer 106 and Ethernet MAC layer 105. The IP protocol layer 107 is implemented in hardware or alternatively in software as explained above.

For the video server 20, the block diagram shows a micro processor 210, a plurality of hard disc drives 220, a memory section based on solid state memories like RAM circuits 230 and an Ethernet interface 240. Also for the case of the video server 20 the IP protocol layer 207 is implemented with either hardware or software means.

The same kind of data transport can be used for the communication between the video server 20 and a work station 30 for post-processing or between any other two stations in the Ethernet network.

The implementations of the RTP-, UDP-, IPv4-layers can be made with dedicated software or hardware means.

For cases, where more than one stream needs to be transferred over Ethernet and these are simultaneous streams like audio, video and metadata streams, that are to be synchronised there might be the need to use additional time stamps. Some file formats like the video format Digital Moving-Picture Exchange - DPX and the Audio Interchange File Format - AIFF do already have a time stamp integrated. This is another reason why an additional RTP time stamp might be superfluous. For those audio / video formats not having an embedded time stamp, it is a further embodiment of the invention to add a time stamp into the optional field. Therefore, in these cases sequence number and time stamps are both in the optional field. This can be done by adding a second Type and Length field ahead of the time stamp field to the optional field. Alternatively, a new type can be specified with one Type and Length field ahead of sequence number and time stamp. Both fields for sequence number and time stamp can be programmed in terms of their respective lengths. Padding can be used to align the optional field to the size of Quadlets as required.

## Claims

1. Method of transferring a real-time data stream, in particular audio and/or video stream, in a network of subscriber stations (10, 20, 30), from a transmitting station (10) to a receiving station (20), wherein an Internet protocol IP is used for packetizing the data stream, **characterized in that** a sequence number is appended in an optional field of an IP packet header.

2. Method according to claim 1, wherein a type field and a length field is also added to the optional field of an IP packet header.

3. Method according to claim 2, wherein the optional field is 4 Bytes wide, the type field and length field comprises 1 Byte each and the sequence number comprises 2 Bytes.

4. Method according to one of claims 1 to 3, wherein the sequence number corresponds to the sequence number that needs to be calculated according to the real-time transport protocol RTP.

5. Sending station for a real-time data stream, comprising an implementation of the Internet protocol IP for packetizing the real-time data stream, **characterized in that** the apparatus includes means for calculating a sequence number for a packet and for inserting the sequence number in an optional field of the IP packet header.

6. Sending station according to claim 5, wherein the IP protocol layer implementation includes further means for inserting a type field and a length field in the optional field of the IP packet header.

7. Sending station according to claim 6, wherein the optional field is 4 Bytes wide, the type field and length field comprises 1 Byte each and the sequence number comprises 2 Bytes.

8. Sending station according to one of claims 5 to 7, wherein the means for calculating the sequence number are adapted to calculate the sequence number in a manner compliant to the sequence number calculation according to the real-time transport protocol RTP.

9. Receiving station for transferring a real-time data stream, comprising an implementation of the Internet protocol IP for processing a packetized real-time data stream, further comprising means for re-ordering the IP packets based on a sequence number, **characterized in that** the apparatus includes means for extracting the sequence number from an optional field of an IP packet.

10. Receiving station according to claim 9, wherein the means for re-ordering the IP packets are adapted to use a sequence number for re-ordering in a manner compliant to the re-ordering based on the sequence numbers in packets of the real-time transport protocol RTP.
